# EUROPEAN PATENT APPLICATION

(11) **EP 4 102 474 A1**
(43) Date of publication of application: **14.12.2022**
(21) Application number: 22165639.0
(22) Date of filing: 30.03.2022
(51) Int. Cl.: G06V 20/58, G06V 10/82, G06V 10/774

(54) **METHOD AND SYSTEM FOR DETERMINING MOVING/STATIONARY STATE OF TRACKING TARGET BASED ON NEURAL NETWORK**

(30) Priority: 10.06.2021 CN 202110647264
(71) Applicant: Nio Technology (Anhui) Co., Ltd, Hefei City, Anhui 230611 (CN)
(72) Inventor: WENG, Lihong, Hefei City, Anhui, 230611 (CN); HU, Yifei, Hefei City, Anhui, 230611 (CN)
(74) Representative: Vossius & Partner Patentanwälte Rechtsanwälte mbB

(57) **Abstract**

The disclosure relates to a method and system for determining a moving/stationary state of a tracking target based on a neural network. The method includes: a training step of extracting feature points for each tracking target in a tracking target set, converting the feature points into feature vectors and labeling the feature vectors with truth values of moving and stationary states of the tracking target, and training a neural network by using the feature vectors and the corresponding truth values of the moving and stationary states as training sample parameters, to obtain a trained neural network classification model; and a testing step of extracting feature vectors of the tracking target, and then inputting the feature vectors into the neural network classification model, to obtain a moving and stationary state classification result for the tracking target. According to the disclosure, the use of the neural network method for determination of a moving/stationary state of the tracking target from the laser radar can improve the accuracy of a determination result.

## Description

### Technical Field

The disclosure relates to autonomous driving technologies, and in particular, to a method for determining a moving/stationary state of a tracking target based on a neural network and a system for determining a moving/stationary state of a tracking target based on a neural network.

### Background Art

As an important sensor for an autonomous vehicle, a laser radar is usually used to detect and track objects such as other vehicles on a road. For a problem of road target tracking, classification of moving and stationary states of a target is an important sub-problem.

For a method for determining a moving/stationary state of a tracking target, in the prior art, a speed of a target is usually directly tracked, and it is then determined, according to magnitude of the speed, whether the target is moving or stationary. However, in such a determination method, morphology of a point cloud and a tracking position are easily changed due to occlusion and other reasons, resulting in a stationary target being mistakenly determined as a moving target. In addition, differentiating between moving and stationary states of the target purely based on the speed of the target easily results in a pedestrian walking at a low speed being mistakenly determined as a stationary target. False determination of a moving/stationary state of a target will affect the decision-making planning and control of a vehicle. Therefore, there is a need for a good algorithm to improve the accuracy of determining a moving/stationary state of a target.

### Summary of the Disclosure

In view of the above problems, the disclosure is intended to provide a method for determining a moving/stationary state of a tracking target based on a neural network and a system for determining a moving/stationary state of a tracking target based on a neural network, which can provide accurate determination of whether a target is moving or stationary.

An aspect of the disclosure provides a method for determining a moving/stationary state of a tracking target based on a neural network. The method includes:
a training step of extracting feature points for each tracking target in a tracking target set from a vehicle laser radar, converting the feature points into feature vectors and labeling the feature vectors with truth values of moving and stationary states of the tracking target, and training a neural network by using the feature vectors and the corresponding truth values of the moving and stationary states as training sample parameters, to obtain a trained neural network classification model; and
a testing step of extracting feature vectors of the tracking target, and then inputting the feature vectors into the neural network classification model, to obtain a moving and stationary state classification result for the tracking target.

Optionally, the training step includes:
a first feature extraction sub-step of extracting feature points for each tracking target in the tracking target set;
a first feature conversion sub-step of converting the feature points into feature vectors; and
a model training sub-step of labeling the converted feature vectors with the truth values of the moving and stationary states of the tracking target, and training the neural network by using the feature vectors and the truth values as the training sample parameters, to obtain the neural network classification model.

Optionally, in the first feature extraction sub-step, a point of the tracking target that is nearest to a present vehicle, a center point of a long edge, and a centroid point are extracted as the feature points.

Optionally, in the first feature extraction sub-step, a method for extracting the point nearest to the present vehicle involves traversing all points in point cloud data of the tracking target to obtain a point nearest to an origin of the laser radar; a method for extracting the center point of the long edge involves extracting a longer edge of a point cloud by using a line fitting method for the point cloud data, and then finding the center point of the edge; and a method for extracting the centroid point involves directly summing and averaging three-dimensional coordinates of each point in the point cloud data, where the point cloud data is composed of points collected by the laser radar.

Optionally, the first feature conversion sub-step includes:
denoting a current moment as t, respectively denoting a nearest point, a center point of a long edge, and a centroid point, which are extracted at the moment t, as Pn,t(X_{n,t}, Y_{n,t}), Pe,t(Xe,t, Ye,t), and Pc,t(Xc,t, Yc,t), the feature vectors being a one-dimensional expansion of a time sequence of the three feature points, which is represented as Ft = [Xn,t, Yn,t, Xe,t, Ye,t, Xc,t, Yc,t, X_{n,t-1}, Y_{n,t-1}, X_{e,t-1}, Ye,ₜ₋₁, X_{c,t}, Y_{c,t-1}, ..., Xn,t-N, Yn,t-N, Xe,t-N, Ye,t-N, X_{c,t-N}, Y_{c,t-N}], where N is 5, and denoting labels for the truth values of the moving and stationary states of the target as Mt, where Mt is 0 or 1, and then, one piece of training sample data is represented as Si = [Ft, Mt].

Optionally, the testing step includes:
a second feature extraction sub-step of extracting, for each tracking target, feature points for tracking results;
a second feature conversion sub-step of converting the feature points into feature vectors; and
a testing sub-step of inputting the feature vectors into the neural network classification model, and determining a moving/stationary state of a current tracking target, to obtain a moving and stationary state classification result.

Optionally, in the testing sub-step, the obtained moving and stationary state classification result for the tracking target is further filtered by means of Bayesian filtering.

An aspect of the disclosure provides a system for determining a moving/stationary state of a tracking target based on a neural network. The system includes:
a training module configured to extract feature points for each tracking target in a tracking target set from a vehicle laser radar, convert the feature points into feature vectors and label the feature vectors with truth values of moving and stationary states of the tracking target, and train a neural network by using the feature vectors and the corresponding truth values of the moving and stationary states as training sample parameters, to obtain a trained neural network classification model; and
a testing module configured to extract feature vectors of the tracking target, and then input the feature vectors into the neural network classification model, to obtain a moving and stationary state classification result for the tracking target.

Optionally, the training module includes:
a first feature extraction sub-module configured to extract feature points for each tracking target in the tracking target set;
a first feature conversion sub-module configured to convert the feature points into feature vectors; and
a model training sub-module configured to label the converted feature vectors with the truth values of the moving and stationary states of the tracking target, and train the neural network by using the feature vectors and the truth values as the training sample parameters, to obtain the neural network classification model.

Optionally, in the first feature extraction sub-module, a point of the tracking target that is nearest to a present vehicle, a center point of a long edge, and a centroid point are extracted as the feature points.

Optionally, in the first feature extraction sub-module, a method for extracting the point nearest to the present vehicle involves traversing all points in point cloud data of the tracking target to obtain a point nearest to an origin of the laser radar; a method for extracting the center point of the long edge involves extracting a longer edge of a point cloud by using a line fitting method for the point cloud data, and then finding the center point of the edge; and a method for extracting the centroid point involves directly summing and averaging three-dimensional coordinates of each point in the point cloud data, where the point cloud data is composed of points collected by the laser radar.

Optionally, the testing module includes:
a second feature extraction sub-module configured to extract feature points for each tracking target in the tracking target set;
a second feature conversion sub-module configured to convert the feature points into feature vectors; and
a testing sub-module configured to input the feature vectors into the neural network classification model, and determine a moving/stationary state of a current tracking target, to obtain a moving and stationary state classification result.

Optionally, in the testing sub-module, the obtained moving and stationary state classification result for the tracking target is further filtered by means of Bayesian filtering.

An aspect of the disclosure provides a computer-readable medium having a computer program stored thereon, where when the computer program is executed by a processor, the method for determining a moving/stationary state of a tracking target based on a neural network is implemented.

An aspect of the disclosure provides a computer device, which includes a storage module, a processor, and a computer program stored on the storage module and executable on the processor, where when the computer program is executed by the processor, the method for determining a moving/stationary state of a tracking target based on a neural network is implemented.

As described above, according to the method for determining a moving/stationary state of a tracking target based on a neural network and the system for determining a moving/stationary state of a tracking target based on a neural network of the disclosure, the use of the neural network method for determination of a moving/stationary state of the tracking target from the laser radar can solve the problem of false determination (for example, recognizing a blocked stationary target as a moving target, or determining a pedestrian walking at a low speed as a stationary target) caused by making determination purely based on speed, and can improve the accuracy of a determination result.

### Brief Description of the Drawings

FIG. 1 is a schematic flowchart of a method for determining a moving/stationary state of a tracking target based on a neural network according to the disclosure.
FIG. 2 is a schematic flowchart of a training phase in a method for determining a moving/stationary state of a tracking target based on a neural network according to an implementation of the disclosure.
FIG. 3 illustrates a tracking time sequence formed for a tracking target.
FIG. 4 is a schematic diagram of extracted three feature points.
FIG. 5 is a schematic flowchart of a testing phase in a method for determining a moving/stationary state of a tracking target based on a neural network according to an implementation of the disclosure.
FIG. 6 is a structural block diagram of a system for determining a moving/stationary state of a tracking target based on a neural network according to the disclosure.

### Detailed Description of Embodiments

Some of the embodiments of the disclosure are described below and are intended to provide a basic understanding of the disclosure. They are not intended to confirm key or decisive elements of the disclosure or limit the scope of protection.

For concise and illustrative purposes, this specification mainly describes the principles of the disclosure with reference to its exemplary embodiments. However, those skilled in the art will readily recognize that the same principles can be equivalently applied to all types of methods for determining a moving/stationary state of a tracking target based on a neural network and systems for determining a moving/stationary state of a tracking target based on a neural network, and the same principles can be implemented therein. Any such changes do not depart from the true spirit and scope of this patent application.

Moreover, in the following description, reference is made to the accompanying drawings, which illustrate specific exemplary embodiments. Electrical, mechanical, logical, and structural changes can be made to these embodiments without departing from the spirit and scope of the disclosure. Furthermore, although the features of the disclosure are disclosed in combination with only one of several implementations/embodiments, if any given or recognizable function may be desired and/or advantageous, this feature can be combined with one or more other features of other implementations/embodiments. Therefore, the following description should not be considered in a limiting sense, and the scope of the disclosure is defined by the appended claims and their equivalents.

The terms such as "have" and "include" indicate that in addition to the units (modules) and steps that are directly and clearly described in the specification and the claims, other units (modules) and steps that are not directly or clearly described are not excluded in the technical solutions of the disclosure.

A main technical idea of the method for determining a moving/stationary state of a tracking target based on a neural network according to the disclosure lies in extracting feature points from a tracking target from a laser radar and accumulating multiple frames of feature points as feature vectors for determination of a moving/stationary state. Specifically, in a training phase, a tracking target sequence from the laser radar is collected, feature vectors are extracted and labeled with truth values of moving and stationary states of a tracking target, where the feature vectors and the truth values are used as parameters of a training sample for training of the neural network. In a testing phase, feature vectors of each tracking target are extracted and then input into the trained neural network for determination, and a moving and stationary state classification result for a current tracking target is output.

In this way, the use of the neural network for classification of moving and stationary states of a target can reduce the occurrence of a situation that morphology of a target point cloud is changed due to occlusion and other reasons, thus resulting in a stationary target being mistakenly determined as a moving target, and reduce the occurrence of a situation that a pedestrian walking at a low speed is detected to be a stationary target purely based on speed determination, thereby improving the accuracy of classification of the moving and stationary states of the tracking target from the laser radar.

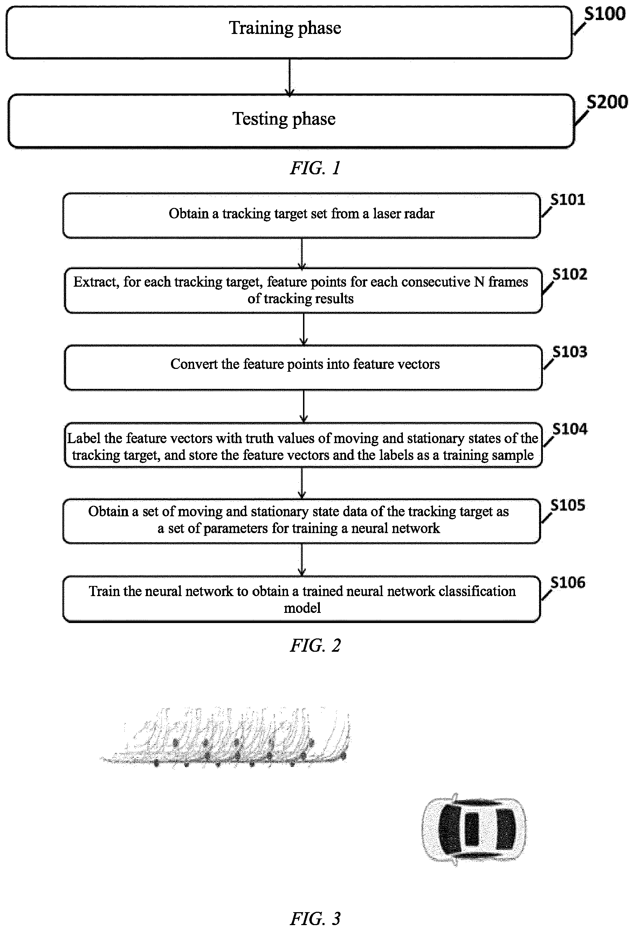

FIG. 1 is a schematic flowchart of a method for determining a moving/stationary state of a tracking target based on a neural network according to the disclosure.

As shown in FIG. 1, the method for determining a moving/stationary state of a tracking target based on a neural network according to the disclosure includes:
a training phase (also called "training step") S100: extracting feature points for each tracking target in a tracking target set, converting the feature points into feature vectors and labeling the feature vectors with truth values of moving and stationary states of the tracking target, and training a neural network by using the feature vectors and the corresponding truth values of the moving and stationary states as training sample parameters, to obtain a trained neural network classification model for implementing classification of the moving and stationary states; and
a testing phase (also called "testing step") S200: extracting feature points of the tracking target, converting the feature points into feature vectors, and then inputting the feature vectors into the neural network classification model obtained in step S100, to obtain a moving and stationary state classification result for the tracking target.

Next, the specific content of the training phase and the testing phase will be described.

FIG. 2 is a schematic flowchart of a training phase in a method for determining a moving/stationary state of a tracking target based on a neural network according to an implementation of the disclosure.

As shown in FIG. 2, the training phase includes:
step S101: obtaining a tracking target set from a laser radar, the set including tracking target sequences with different IDs for tracking, and IDs here being used to distinguish different targets, where each target in the tracking targets has a particular ID, and the tracking target sequence refers to a traveling trajectory formed by positions of a same target that change over time;
step S102: extracting, for each tracking target, feature points for each consecutive N frames of tracking results, where N here is preferably five, for example, that is, for each tracking target sequence, extracting feature points of a tracking target point cloud for consecutive five frames of tracking results, where in this implementation, N is preferably five, and N may also be other numbers in practical applications, but a small number easily leads to inaccurate detection, and a large number may lead to delayed detection;
step S103: converting feature points into feature vectors, where a specific algorithm for converting the feature points into the feature vectors will be described below;
step S104: labeling the feature vectors with truth values (i.e., labels for the truth values) of moving and stationary states of the tracking target, and storing the feature vectors and the labels as a training sample;
step S105: obtaining a set of moving and stationary state data of the tracking target as a set of parameters for training the neural network; and
step S106: training the neural network by using the above set of parameters, to obtain a trained neural network classification model for implementing classification of the moving and stationary states.

With regard to the tracking target sequences mentioned in steps S101 and S102, FIG. 3 illustrates a tracking time sequence formed for a tracking target. Each target in the tracking targets has a particular ID, and the tracking target sequence refers to a traveling trajectory formed by positions of a same target that change over time, as shown in FIG. 3. The target here refers to an obstacle extracted from a laser radar point cloud. Therefore, the "target" essentially refers to an obstacle composed of a point cloud, which is different from a laser radar point cloud on the ground and other roads.

Next, the specific content of extracting the feature points in step S102 will be described.

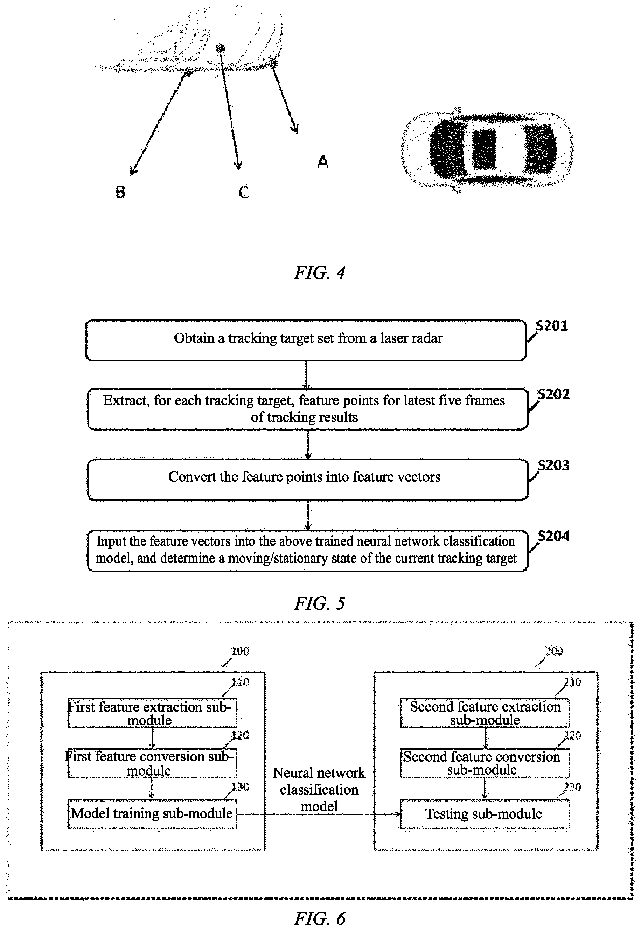

Three feature points are extracted in this implementation, and FIG. 4 is a schematic diagram of extracted three feature points.

As shown in FIG. 4, FIG. 4 shows three feature points A, B, and C extracted in this implementation. Point A represents a point in point cloud data of a current tracking target that is nearest to a present vehicle, point B represents a center point of a long edge scanned by a laser radar, and point C represents a centroid point of a tracking target point cloud.

At present, only a center point of a target is used in general tracking methods. When a laser radar scans a vehicle target, only part of the target can be scanned, and therefore, a center point is not very stable. In this implementation, three feature points are selected, such that mutual redundancy in the stability of the feature points can be realized at different distances and angles, and more abundant features can be provided for subsequent machine learning algorithms, thereby making results more stable.

Here, methods for obtaining the three feature points are described.

A method for extracting point A, i.e., the nearest point of a target point cloud involves traversing all points in the point cloud data of the tracking target to obtain a point nearest to an origin of the laser radar (i.e., an origin of a coordinate system of a laser radar sensor), and using point A as point A.

A method for extracting point B, i.e., the center point of the long edge of the target point cloud involves extracting a longer edge of the point cloud by using a line fitting method for the point cloud data, then finding a center point of the edge, and using point A as point B. The method for extracting the line may be the line fitting method such as least square and RANSAC.

A method for extracting point C, i.e., the centroid point of the target point cloud involves directly summing and averaging three-dimensional coordinates of each point in the point cloud data, to obtain the centroid point.

Next, the specific process of converting the feature points into the feature vectors in step S103 will be described. The conversion of the feature points into the feature vectors is a one-dimensional expansion of a time sequence of the above three feature points, which is specifically as follows:
denoting a current moment as t, respectively denoting a nearest point, a center point of a long edge, and a centroid point, which are extracted at the moment t, as Pn,t(X_{n,t}, Y_{n,t}), Pe,t(Xe,t, Ye,t), and Pc,t(Xc,t, Yc,t), the feature vectors being a one-dimensional expansion of a time sequence of the three feature points, which is represented as Ft = [Xn,t, Yn,t, Xe,t, Ye,t, Xc,t, Yc,t, X_{n,t-1}, Y_{n,t-1}, X_{e,t-1}, Ye,ₜ₋₁, Xc,t, Yc,t-i, ..., X_{n,t-N}, Y_{n,t-N}, X_{e,t-N}, Y_{e,t-N}, X_{c,t-N}, Y_{c,t-N}], where N is five (i.e., five frames are taken), and denoting labels for the truth values of the moving and stationary states of the target as Mt, where Mt is 0 or 1, and then, one piece of training sample data is represented as Si = [Ft, Mt].

In step S106, the neural network is trained by using the above parameters, to obtain the trained neural network classification model for implementing classification of the moving and stationary states. In this implementation, preferably, under a condition of ensuring accuracy, in order to reduce parameters and the amount of calculation, a five-layer neural network is used as the classification model. There is a 1 × 30 feature vector in an input layer, there are respectively 50, 20 and 10 nodes in a hidden layer, there is a 2 × 1 vector in an output layer, and parameters of the neural network are trained by using methods such as stochastic gradient descent, such that the neural network classification model for implementing classification of the moving and stationary states is obtained.

FIG. 5 is a schematic flowchart of a testing phase in a method for determining a moving/stationary state of a tracking target based on a neural network according to an implementation of the disclosure.

Referring to FIG. 5, in the testing phase, the neural network classification model obtained above is used for determination of a moving/stationary state of the tracking target. For a tracking target at a current moment, preferably, for example, latest five frames of tracking results are taken, feature points are extracted and converted into feature vectors, and the feature vectors are input into the neural network classification model obtained above, to obtain a moving and stationary state classification result for the target.

As shown in FIG. 5, the specific steps in the testing phase include:
step S201: obtaining a tracking target set from a laser radar;
step S202: extracting, for each tracking target, feature points for latest five frames of tracking results;
step S203: converting the feature points into feature vectors; and
step S204: inputting the feature vectors into the above trained neural network classification model, and determining a moving/stationary state of the current tracking target, to obtain a moving and stationary state classification result.

The method for converting feature points into feature vectors in step S203 is the same as that in step S103.

In the testing phase, as a further preferred mode, after step S204, the obtained moving and stationary state classification result for the tracking target is filtered by means of Bayesian filtering, such that a more stable moving and stationary state classification result can be obtained.

The method for determining a moving/stationary state of a tracking target based on a neural network according to the disclosure has been described above, and then, a system for determining a moving/stationary state of a tracking target based on a neural network according to the disclosure will be described.

FIG. 6 is a structural block diagram of a system for determining a moving/stationary state of a tracking target based on a neural network according to the disclosure.

As shown in FIG. 6, the system for determining a moving/stationary state of a tracking target based on a neural network according to the disclosure includes:
a training module 100 configured to extract feature points for each tracking target in a tracking target set, convert the feature points into feature vectors and label the feature vectors with truth values of moving and stationary states of the tracking target, and train a neural network by using the feature vectors and the corresponding truth values as training sample parameters, to obtain a trained neural network classification model; and
a testing module 200 configured to extract feature vectors of the tracking target, and then input the feature vectors into the neural network classification model, to obtain a moving and stationary state classification result for the tracking target.

The training module 100 includes:
a first feature extraction sub-module 110 configured to extract feature points for each tracking target in the tracking target set;
a first feature conversion sub-module 120 configured to convert the feature points into feature vectors; and
a model training sub-module 130 configured to label the converted feature vectors with the truth values of the moving and stationary states of the tracking target, and train the neural network by using the feature vectors and the truth values as the training sample parameters, to obtain the neural network classification model.

Preferably, in the first feature extraction sub-module 110, a point nearest to a present vehicle, a center point of a long edge, and a centroid point are extracted as the feature points. In the first feature extraction sub-module 110, a method for extracting the point nearest to the present vehicle involves traversing all points of a laser radar point cloud, to obtain a point nearest to an origin of a radar; a method for extracting the center point of the long edge involves extracting a longer edge of the laser radar point cloud by using a line fitting method for the point cloud, and then finding the center point of the edge; and a method for extracting the centroid point involves directly summing and averaging three-dimensional coordinates of each point in the laser radar point cloud, where the laser radar point cloud is composed of points collected by a laser radar.

As such, in the first feature conversion sub-module, the conversion of the feature points into the feature vectors is performed in the following way: denoting a current moment as t, respectively denoting a nearest point, a center point of a long edge, and a centroid point, which are extracted at the moment t, as Pn,t(X_{n,t}, Y_{n,t}), Pe,t(Xe,t, Ye,t), and Pc,t(X_{c,t}, Y_{c,t}), the feature vectors being a one-dimensional expansion of a time sequence of the three feature points, which is represented as Ft = [X_{n,t}, Y_{n,t}, X_{e,t}, Y_{e,t}, X_{c,t}, Y_{c,t}, X_{n,t-1}, Y_{n,t-1}, X_{e,t-1}, Ye,ₜ₋₁, X_{c,t}, Y_{c,t-1}, ..., X_{n,t-N}, Y_{n,t-N}, X_{e,t-N}, Y_{e,t-N}, X_{c,t-N}, Y_{c,t-N}], where N is five (i.e., five frames are taken), and denoting labels for the truth values of the moving and stationary states of the target as Mt, where Mt is 0 or 1, and then, one piece of training sample data is represented as Si = [Ft, Mt]. Further, the testing module 200 includes:
a second feature extraction sub-module 210 configured to extract feature points for each tracking target in the tracking target set;
a second feature conversion sub-module 220 configured to convert the feature points into feature vectors; and
a testing sub-module 230 configured to input the feature vectors into the neural network classification model, and determine a moving/stationary state of a current tracking target, to obtain a moving and stationary state classification result.

Preferably, in the testing sub-module 230, the obtained moving and stationary state classification result for the tracking target is further filtered by means of Bayesian filtering.

As described above, according to the method for determining a moving/stationary state of a tracking target based on a neural network and the system for determining a moving/stationary state of a tracking target based on a neural network of the disclosure, the use of the neural network method for determination of a moving/stationary state of the tracking target from the laser radar can solve the problem of false determination (for example, recognizing a blocked stationary target as a moving target, or determining a pedestrian walking at a low speed as a stationary target) caused by making determination simply based on speed, and can improve the accuracy of a determination result.

The disclosure further provides a computer-readable medium having a computer program stored thereon, where when the computer program is executed by a processor, the method for determining a moving/stationary state of a tracking target based on a neural network is implemented.

The disclosure further provides a computer device, which includes a storage module, a processor, and a computer program stored on the storage module and executable on the processor, where when the computer program is executed by the processor, the method for determining a moving/stationary state of a tracking target based on a neural network is implemented.

The method for determining a moving/stationary state of a tracking target based on a neural network and the system for determining a moving/stationary state of a tracking target based on a neural network according to the disclosure are mainly described in the above examples. Although only some specific implementations of the disclosure are described, a person of ordinary skill in the art should understand that the disclosure may be implemented in multiple other forms without departing from the essence and scope of the disclosure. Accordingly, the presented examples and implementations are considered to be illustrative rather than restrictive, and the disclosure may encompass various modifications and replacements without departing from the spirit and scope of the disclosure that are defined by the appended claims.

## Claims

1. A method for determining a moving/stationary state of a tracking target based on a neural network, the method comprising:
a training step of extracting feature points for each tracking target in a tracking target set from a vehicle laser radar, converting the feature points into feature vectors and labeling the feature vectors with truth values of moving and stationary states of the tracking target, and training a neural network by using the feature vectors and the corresponding truth values of the moving and stationary states as training sample parameters, to obtain a trained neural network classification model; and
a testing step of extracting feature points of the tracking target and converting the feature points into feature vectors, and then inputting the feature vectors into the neural network classification model, to obtain a moving and stationary state classification result for the tracking target.

2. The method for determining a moving/stationary state of a tracking target based on a neural network according to claim 1, wherein the training step comprises:
a first feature extraction sub-step of extracting a plurality of feature points for each tracking target in the tracking target set;
a first feature conversion sub-step of converting the plurality of feature points into feature vectors; and
a model training sub-step of labeling the converted feature vectors with the truth values of the moving and stationary states of the tracking target, and training the neural network by using the feature vectors and the corresponding truth values of the moving and stationary states as the training sample parameters, to obtain the neural network classification model.

3. The method for determining a moving/stationary state of a tracking target based on a neural network according to claim 2, wherein
in the first feature extraction sub-step, a point of the tracking target that is nearest to a present vehicle, a center point of a long edge, and a centroid point are extracted as the feature points.

4. The method for determining a moving/stationary state of a tracking target based on a neural network according to claim 3, wherein
in the first feature extraction sub-step, a method for extracting the point nearest to the present vehicle involves traversing all points in point cloud data of the tracking target to obtain a point nearest to an origin of the laser radar; a method for extracting the center point of the long edge involves extracting a longer edge of a point cloud by using a line fitting method for the point cloud data, and then finding the center point of the edge; and a method for extracting the centroid point involves directly summing and averaging three-dimensional coordinates of each point in the point cloud data, wherein the point cloud data is composed of points collected by the laser radar.

5. The method for determining a moving/stationary state of a tracking target based on a neural network according to claim 3 or 4, wherein
the first feature conversion sub-step comprises:
denoting a current moment as t, respectively denoting a nearest point, a center point of a long edge, and a centroid point, which are extracted at the moment t, as Pn,t(X_{n,t}, Y_{n,t}), Pe,t(Xe,t, Ye,t), and Pc,t(X_{c,t}, Y_{c,t}), the feature vectors being a one-dimensional expansion of a time sequence of the three feature points, which is represented as Ft = [Xn,t, Yn,t, Xe,t, Ye,t, Xc,t, Yc,t, X_{n,t-1}, Y_{n,t-1}, X_{e,t-1}, Y_{e,t-1}, Xc,t, Y_{c,t-1}, ..., Xn,t-N, Yn,t-N, Xe,t-N, Ye,t-N, X_{c,t-N}, Y_{c,t-N}], where N is 5, and denoting labels for the truth values of the moving and stationary states of the target as Mt, where Mt is 0 or 1, and then, one piece of training sample data is represented as Si = [Ft, Mt].

6. The method for determining a moving/stationary state of a tracking target based on a neural network according to any one of claims 1 to 5, wherein the testing step comprises:
a second feature extraction sub-step of extracting, for each tracking target, a plurality of feature points for tracking results;
a second feature conversion sub-step of converting the plurality of feature points into feature vectors; and
a testing sub-step of inputting the feature vectors into the neural network classification model so that the neural network classification model determines a moving/stationary state of a current tracking target, to obtain a moving and stationary state classification result.

7. The method for determining a moving/stationary state of a tracking target based on a neural network according to claim 6, wherein
in the testing sub-step, the obtained moving and stationary state classification result for the tracking target is further filtered by means of Bayesian filtering.

8. A system for determining a moving/stationary state of a tracking target based on a neural network, preferably being adapted to perform the method according to any one of claims 1 to 7, the system comprising:
a training module configured to extract feature points for each tracking target in a tracking target set from a vehicle laser radar, convert the feature points into feature vectors and label the feature vectors with truth values of moving and stationary states of the tracking target, and train a neural network by using the feature vectors and the corresponding truth values of the moving and stationary states as training sample parameters, to obtain a trained neural network classification model; and
a testing module configured to extract feature vectors of the tracking target, and then input the feature vectors into the neural network classification model, to obtain a moving and stationary state classification result for the tracking target.

9. The system for determining a moving/stationary state of a tracking target based on a neural network according to claim 8, wherein the training module comprises:
a first feature extraction sub-module configured to extract a plurality of feature points for each tracking target in the tracking target set;
a first feature conversion sub-module configured to convert the plurality of feature points into feature vectors; and
a model training sub-module configured to label the converted feature vectors with the truth values of the moving and stationary states of the tracking target, and train the neural network by using the feature vectors and the corresponding truth values of the moving and stationary states as the training sample parameters, to obtain the neural network classification model.

10. The system for determining a moving/stationary state of a tracking target based on a neural network according to claim 9, wherein
in the first feature extraction sub-module, a point of the tracking target that is nearest to a present vehicle, a center point of a long edge, and a centroid point are extracted as the feature points.

11. The system for determining a moving/stationary state of a tracking target based on a neural network according to claim 10, wherein
in the first feature extraction sub-module, a method for extracting the point nearest to the present vehicle involves traversing all points in point cloud data of the tracking target to obtain a point nearest to an origin of the laser radar; a method for extracting the center point of the long edge involves extracting a longer edge of a point cloud by using a line fitting method for the point cloud data, and then finding the center point of the edge; and a method for extracting the centroid point involves directly summing and averaging three-dimensional coordinates of each point in the point cloud data, wherein the point cloud data is composed of points collected by the laser radar.

12. The system for determining a moving/stationary state of a tracking target based on a neural network according to any one of claims 8 to 11, wherein the testing module comprises:
a second feature extraction sub-module configured to extract a plurality of feature points for each tracking target in the tracking target set;
a second feature conversion sub-module configured to convert the plurality of feature points into feature vectors; and
a testing sub-module configured to input the feature vectors into the neural network classification model so that the neural network classification model determines a moving/stationary state of a current tracking target, to obtain a moving and stationary state classification result.

13. The system for determining a moving/stationary state of a tracking target based on a neural network according to claim 12, wherein
in the testing sub-module, the obtained moving and stationary state classification result for the tracking target is further filtered by means of Bayesian filtering.

14. A computer device, comprising a storage module, a processor, and a computer program stored on the storage module and executable on the processor, wherein when the computer program is executed by the processor, a method for determining a moving/stationary state of a tracking target based on a neural network is implemented, preferably the method according to any one claims 1 to 7 the method comprising:
a training step of extracting feature points for each tracking target in a tracking target set from a vehicle laser radar, converting the feature points into feature vectors and labeling the feature vectors with truth values of moving and stationary states of the tracking target, and training a neural network by using the feature vectors and the corresponding truth values of the moving and stationary states as training sample parameters, to obtain a trained neural network classification model; and
a testing step of extracting feature points of the tracking target and converting the feature points into feature vectors, and then inputting the feature vectors into the neural network classification model, to obtain a moving and stationary state classification result for the tracking target.
